# EUROPEAN PATENT APPLICATION

(11) **EP 1 661 831 A1**
(43) Date of publication of application: **31.05.2006**
(21) Application number: 04772111.3
(22) Date of filing: 18.08.2004
(51) Int. Cl.: B65G 61/00

(54) **INFORMATION COMMUNICATION SYSTEM, AND PHYSICAL DISTRIBUTION SYSTEM USING THE INFORMATION COMMUNICATION SYSTEM**

(30) Priority: 25.08.2003 JP 2003300430; 25.08.2003 JP 2003300429
(71) Applicant: HONDA MOTOR CO., Ltd., Tokyo 107-8556 (JP)
(72) Inventor: KIRIYAMA, Hiroaki c/o Honda Motor Co., Ltd., Minato-ku, Tokyo 1078556 (JP)
(74) Representative: Herzog, Markus
(86) International application number: PCT/JP2004/012150
(87) International publication number: WO 2005/019073

(57) **Abstract**

In a physical distribution system (150) for delivering a package (10) from a sending source (141) to a receiving destination (143), an information-transfer system (1) for conveying product information (131) along with the package (10) comprises an IC tag (5), an information-writing device (2), electronic mail (121) and an information-reading device (6). The IC tag (5) is attached to the package (10) and stores the product information (131) thereof, and the information-writing device (2) writes the product information (131) in association with key information (132) into the IC tag (5) when the product information (131) and the key information (132) are entered at the sending source (141). The electronic mail (121) is used for sending the key information (132) from the sending source (141) to the receiving destination (143) through a route different from that taken by the package (10), and the information-reading device (6) retrieves from the IC tag (5) only the product information (131) that is associated with the key information (132) when the key information (132) is entered at the receiving destination (143).

## Description

### FIELD OF THE INVENTION

The present invention relates to an information-transfer system which is used for conveying information of a package, for example, of a product, together with the package to a downstream stage in a delivery process. It relates also to a physical distribution system to which this information-transfer system is applied.

### BACKGROUND OF THE INVENTION

As a method for delivering packages of, for example, products, a physical distribution system that uses trucks is well-known. For delivery of products by truck, in some cases, products are transported from a factory where they are manufactured, directly to a destination (or receiving destination). However, in many cases, a physical distribution system includes distribution bases through which product packages are transferred. Such a physical distribution system functions as follows: packages are collected once from a factory to a distribution base that is located near the factory, and then the packages are transferred to another distribution base that is located near a receiving destination and then delivered from that base to the destination. In cases where packages are delivered to a remote location or overseas, en route distribution bases can be in airports or in seaports, and the packages are transported by airplane or by cargo boat or by railway.

By the way, it is customary that products delivered in this way are each attached with a transaction slip, which carries information used as reference and accessed visually or by means of bar-code reading in executing such operations as collection, transportation, and delivery. Although the information carried on such a transaction slip is now managed by a computer system for improving operational efficiency, it has become difficult for the transaction slip to carry all information necessary for the transactions executed on the product as the numbers of products being transported (transportation loads) have increased, and there have been demands for reductions in the time spent from the collection to the delivery and for diversifications on the timing of collecting and delivering products. To solve such problems, nowadays, it is becoming a common practice that information related to a product, which information is necessary in a physical distribution system and to be conveyed to downstream operations, is managed collectively in a Radio Frequency Identification (RFID) tag (hereinafter referred to as "IC tag"), which comprises an IC memory and is attached on a product (refer to, for example, Japanese Laid-Open Patent Publication No. 2001-23073 (pages 3 and 4 and FIG. 1)).

A typical IC tag has an information storage capacity much larger than a bar code, so a large amount of information of and important to various companies is flowing through a physical distribution process though such related information stored in the IC tag is not required at each physical distribution base or the receiving destination since each base requires limited information specific to the respective base. This situation is such that the information which has already become unnecessary at an initial stage (upstream stage) in a physical distribution process flows continuously to the last stage (downstream stage), the information being attached on the product. This presents a security problem in protecting information.

In addition, in a case where information is stored in an IC tag and conveyed to a downstream stage, because the information related to the product (package) is stored as is in the IC tag, an unauthorized person, who is not involved in the delivery, can retrieve and obtain the information from the IC tag at any stage in the process of physical distribution. For preventing such information leak, it is possible that the information be encrypted when it is stored into the IC tag. In this case, even if the encrypted bits are retrieved from the IC tag, it is difficult to decipher the information. However, it is still a problem because no physical protection measure is provided against the access to the information by an unauthorized person. Therefore, if the bits are decrypted, then there will be an information leak.

### SUMMARY OF THE INVENTION

The present invention is to solve such problems. It is an object of the present invention to provide an information-transfer system that allows a physical distribution base to retrieve only the information necessary for the respective distribution base from an IC tag (information-storing means), where relevant information is managed. It is another object of the present invention to provide a physical distribution system that comprises the information-transfer system.

It is a further object of the present invention to provide an information-transfer system that makes it impossible for an unauthorized person to access to the relevant information stored in an IC tag, by a simple method. It is yet another object of the present invention to provide a physical distribution system that comprises this information-transfer system.

According to a first aspect of the present invention, an information-transfer system is for transferring an object (for example, the package 10 described in the following embodiment) and relevant information (for example, the product information 131 described in the following embodiment) from a sending source to a receiving destination, and the system comprises information storage means (for example, the IC tag 5 described in the following embodiment), information storing means (for example, the information-writing device 2 described in the following embodiment), key-information sending means (for example, the electronic mail 121 described in the following embodiment), and information reading means (for example, the information-reading device 6 described in the following embodiment). The information storage means is attached to the object and stores the relevant information, and the information storing means writes into the information storage means the relevant information in association with key information when the key information and the relevant information are entered at the sending source. The key-information sending means sends the key information from the sending source to the receiving destination through a route different from that taken by the object, and the information reading means, when the key information is entered at the receiving destination, reads from the information storage means the relevant information that is associated with the key information.

In a case where the object is delivered through at least one en route location (for example, the physical distribution base 142 described in the following embodiment), the relevant information comprises a plurality of relevant information sets each of which is specific to and to be conveyed to a corresponding one of the en route locations and the receiving destination, and the key information comprises a plurality of key information pieces each of which is distinctly specified to a corresponding one of the en route locations and the receiving destination. For such a case, the information storing means in the information-transfer system according to the present invention, preferably, writes into the information storage means the relevant information sets specifically in association with the key information pieces, each of which is distinct and specific to a corresponding one of the en route locations or the receiving destination, and the key-information sending means sends the key information pieces each specifically to a corresponding one of the en route locations and the receiving destination. When the key information piece received is entered at any of the locations, the information reading means reads from the information storage means only the relevant information set that corresponds with the key information piece.

Additionally, when the specific key information is entered, and the information reading means reads from the information storage means the part of the relevant information that corresponds with the specific key information, preferably, the information reading means deletes from the information storage means that part of the relevant information, which corresponds with the specific key information entered.

Furthermore, it is preferable that the information storage means comprise an IC tag, from and to which the relevant information can be read and written without any physical contact.

Also, a physical distribution system according to the present invention comprises any of the information-transfer systems described above and at least one physical distribution base, through which an object is delivered from a sending source to a receiving destination.

As described above, the relevant information is stored in association with the key information into the information storage means at the sending source, and the key information is sent to the receiving destination through a route different from that of the object. At the receiving destination, the key information received there makes only the relevant information that is associated with the key information readable from the information storage means. As a result, this system has high data security.

Furthermore, if the object is delivered through at least one en route location, the relevant information, which comprises a plurality of relevant information sets, is stored into the information storage means, in association with the key information, which comprises a plurality of key information pieces each key information piece being distinct and specific to a corresponding one of the en route locations or the receiving destination, and the key information pieces are sent each specifically to a corresponding one of the en route locations and the receiving destination. At each of the en route locations or the receiving destination, no information can be read from the information storage means except the relevant information set that corresponds with the key information piece, which has been received there. As a result, this system has high data security.

Additionally, when only the part of the relevant information that corresponds with the specific key information is read from the information storage means, that part of the relevant information is deleted from the information storage means. This arrangement makes the part of the relevant information that has been deleted inaccessible for the en route locations and the receiving destination that are downstream in the delivery process. As a result, the data security is further improved.

In this system, if the information storage means comprises an IC tag, from and to which the relevant information can be read and written without any physical contact, then a large amount of information can be read and written in a short period of time, improving operational efficiency.

Also, if a physical distribution system comprises any of the information-transfer systems described above and at least one physical distribution base, through which an object is delivered from a sending source to a receiving destination, then the physical distribution system can have high data security.

According to a second aspect of the present invention, an information-transfer system is for transferring an object (for example, the package 10 described in the following embodiment) and relevant information (for example, the product information 230 described in the following embodiment) from a sending source to a receiving destination, and the system comprises information storage means (for example, the IC tag 5 described in the following embodiment), information storing means (for example, the information-writing device 2 described in the following embodiment), divided information sending means (for example, the electronic mail 221 described in the following embodiment), and information reading means (for example, the information-reading device 6 described in the following embodiment). The information storage means is attached to the object and stores part of the relevant information, and the information storing means divides the relevant information into first relevant information and second relevant information and writes the first relevant information into the information storage means at the sending source. The divided information sending means sends the second relevant information from the sending source to the receiving destination through a route different from that of the object, and the information reading means restores at the receiving destination the relevant information from the first relevant information read from the information storage means and the second relevant information received from the divided information sending means.

This system may be arranged for a case where the object is delivered through at least one en route location (for example, the physical distribution base 242 described in the following embodiment). Then, preferably, the relevant information comprises a plurality of relevant information sets each of which is specific to and to be conveyed to a corresponding one of the en route locations and the receiving destination. The information storing means stores into the information storage means the divided sets of first relevant information each set being specifically in association to a corresponding one of the en route locations or the receiving destination, and the divided information sending means sends the divided sets of second relevant information from the sending source each set being sent specifically to a corresponding one of the en route locations or the receiving destination through a route different from that of the object, and the information reading means restores the relevant information set specifically for each of the en route locations or the receiving destination from the divided set of first relevant information, which is specifically associated to the respective one of the en route locations or the receiving destination, and from the divided set of second relevant information, which has been received from the divided information sending means.

It is preferable that the information reading means read the first relevant information from the information storage means and delete the first relevant information from the information storage means after the reading.

It is also preferable that the information storage means comprise an IC tag, from and to which the relevant information can be read and written without any physical contact.

Additionally, a physical distribution system according to the present invention comprises any of the above described information-transfer system and at least one physical distribution base, through which an object is delivered from a sending source to a receiving destination.

As described above, at the sending source, the relevant information to be conveyed to downstream stages is divided into two, and one division (first relevant information) is stored into the information storage means and sent with the object for the receiving destination, and the other (second relevant information) is sent to the receiving destination through a route different from that of the object. At the receiving destination, the original relevant information is restored only from the first relevant information and the second relevant information that has been received there and corresponds with the first relevant information. As a result, the system has high data security.

If the object is to be delivered through at least one en route location, then the information storage means stores the first relevant information in divisions that are specifically in association to the en route locations and the receiving destination, respectively, and the second relevant information is sent also in divisions each specified for a corresponding one of the en route locations or the receiving destination. In this arrangement, at each of the en route locations or the receiving destination, the corresponding part of the original relevant information is specifically restored only when the corresponding part of the first relevant information matches the division of the second relevant information, which has been received there. As a result, the system has high data security.

Additionally, when part of the first relevant information is read from the information storage means, this part of the information, which has been read, is deleted from the information storage means. This deletion makes the information that has been deleted inaccessible for the en route locations and the receiving destination that are downstream in the delivery process. As a result, the data security is further improved.

Furthermore, if the information storage means comprises an IC tag, from and to which the relevant information can be read and written without any physical contact, then a large amount of information can be read and written in a short period of time, improving operational efficiency.

Also, if a physical distribution system comprises any of the information-transfer systems described above and at least one physical distribution base, through which an object is delivered from a sending source to a receiving destination, then the physical distribution system can have high data security.

### BRIEF DESCRIPTIN OF THE DRAWINGS

FIG. 1 is a schematic diagram showing an information-transfer system and a physical distribution system according to a first aspect of the present invention.
FIG. 2 is a block diagram showing an IC tag and a reader/writer.
FIG. 3 is a flow chart showing an information-writing operation being executed on an IC tag in the information-transfer system according to the first aspect of the present invention.
FIG. 4 is a flow chart showing a key-information receiving operation being executed in the information-transfer system according to the first aspect of the present invention.
FIG. 5 is a flow chart showing an information-reading operation being executed on an IC tag in the information-transfer system according to the first aspect of the present invention.
FIG. 6 is a schematic diagram showing an information-transfer system and a physical distribution system according to a second aspect of the present invention.
FIG. 7 is a flow chart showing an information-writing operation being executed on an IC tag in the information-transfer system according to the second aspect of the present invention.
FIG. 8 is a flow chart showing a divided information receiving operation being executed in the information-transfer system according to the second aspect of the present invention.
FIG. 9 is a flow chart showing an information-reading operation being executed on an IC tag in the information-transfer system according to the second aspect of the present invention.

### DESCRIPTION OF THE PREFERED EMBODIMENTS

Now, preferred embodiments of the present invention are explained in reference to the drawings.

### First Embodiment

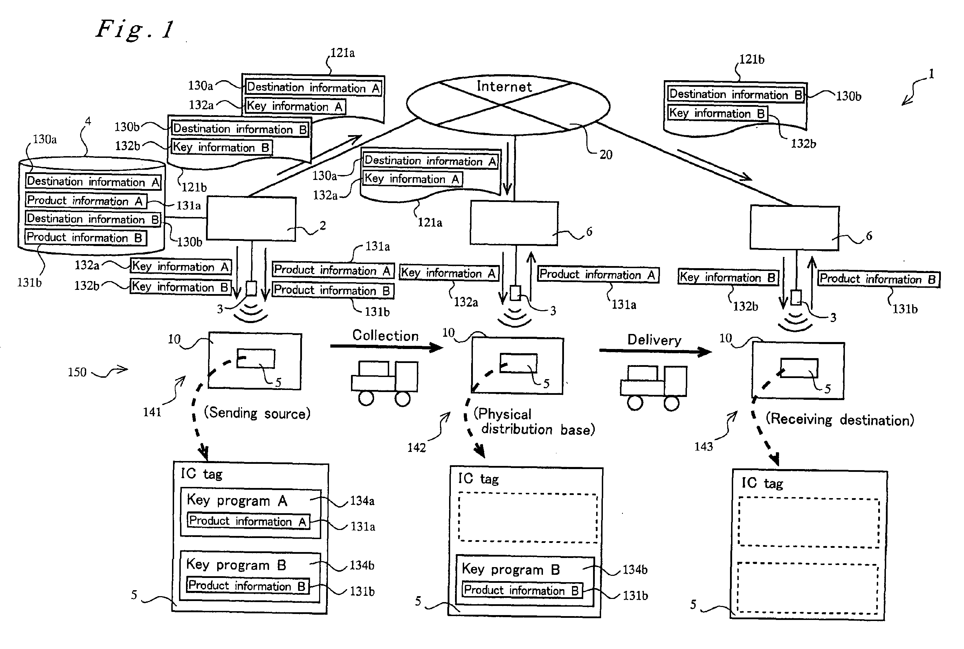

At first, a first embodiment of the present invention is described in reference to FIG. 1 ~ FIG. 5. The information-transfer system as first embodiment stores information relating to a package (product) into an IC tag, which is attached on the package to be transported in a physical distribution system, and the information-transfer system conveys instructions or information from an upstream stage to a downstream stage in the distribution system, by allowing the information to be read at en-route physical distribution bases and a receiving destination. At first, the physical distribution system 150, to which the information-transfer system 1 is applied, is described in reference to FIG. 1, which shows a case where a package 10 is delivered from a sending source 141 via a physical distribution base 142 to a receiving destination 143. In the case shown in FIG. 1, only one physical distribution base 142 is illustrated, but the distribution bases can be in plural.

The package 10 is attached with an IC tag 5, which is used for storing relevant information needed at and therefore conveyed to en route spots, i.e., the physical distribution base 142 and the receiving destination 143. The relevant information is written into the IC tag 5 by using an information-writing device 2 and is read therefrom by using an information-reading device 6. The information-writing device 2 and the information-reading device 6 comprise each a reader/writer 3, which enters data into and retrieves data from the IC tag 5, respectively. In the information-transfer system 1, key information 132 is required for the input and retrieval of data into and from the IC tag 5, which is described later. Therefore, the information-writing device 2 and the information-reading device 6 are connected with each other through a network (for example, the Internet) 20, so that the information-writing device 2 can send the key information 132 to the information-reading device 6.

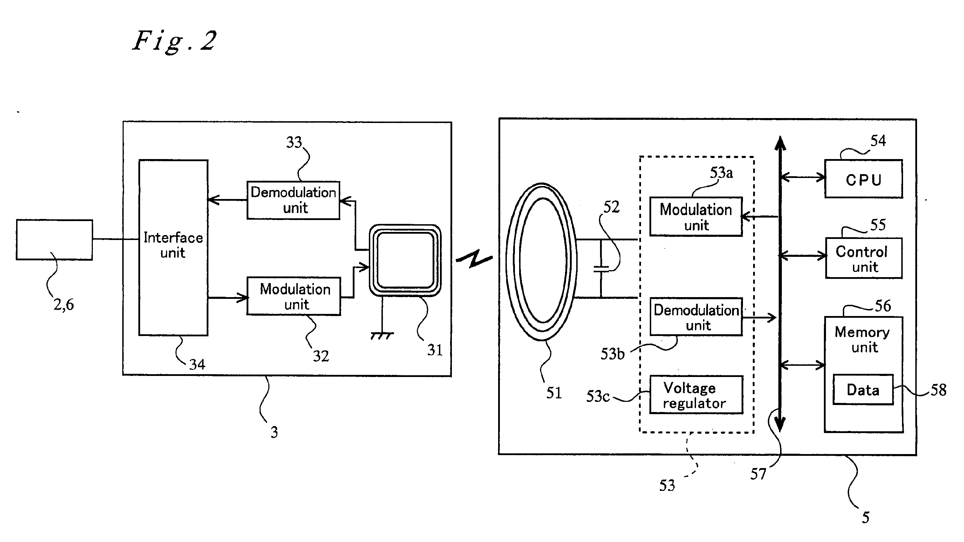

Now, the IC tag (RFID tag) 5 and the reader/writer 3, which are used in the information-transfer system 1 according to the present invention, are described in reference to FIG. 2. The IC tag 5 comprises an antenna 51, a condenser 52 and an IC chip, which incorporates other circuits as an integrated circuit. The IC tag 5 communicates with the reader/writer 3 by electromagnetic waves such as radio waves and microwaves. The IC chip includes an interface section 53, a CPU 54, a control unit 55 and a memory unit 56, which are connected to one another through an internal bus 57.

The reader/writer 3, which communicates with the IC tag 5 for writing to and reading from the memory unit 56, comprises a modulation unit 32 and a demodulation unit 33, which are connected, respectively, to an antenna 31. The reader/writer 3 is connected through an interface unit 34 to the information-writing device 2 or to the information-reading device 6.

For example, when the reader/writer 3 receives from the information-writing device 2 a command for writing data to the IC tag 5 (write command), the data together with the write command pass through the interface unit 34 to the modulation unit 32, where they are modulated into transmission signals. The signals are transmitted in electromagnetic wave from the antenna 31 of the reader/writer 3 and received by the IC tag 5 through a resonant circuit, which comprises the above mentioned antenna 51 and condenser 52. The received signals pass through the interface section 53, where the signals are demodulated by a demodulation unit 53b into the write command and the data. In response to the write command, the CPU 54 processes a control program stored in the control unit 55 for storing the data 58 into the memory unit 56.

On the other hand, when the reader/writer 3 receives from the information-reading device 6 a command for reading the data 58 of the IC tag 5 (read command), the read command is modulated and transmitted in the same way as described above. In the IC tag 5, the read command is executed for retrieving the data 58, which is stored in the memory unit 56, and the retrieved data are modulated into signals, which are then transmitted from the antenna 51. The signals are received by the reader/writer 3 through the antenna 31 and are demodulated by the demodulation unit 33 into the data, and the data are then handed to the information-reading device 6.

By the way, the interface section 53 of the IC tag 5 includes a voltage regulator 53c, which stabilizes the electrical current being induced by the radio waves transmitted from the reader/writer 3 and supplies it in direct current for driving the respective units.

The IC tag 5 is driven mainly by radio (electromagnetic wave) such that data are read from and written to the memory unit 56 of the IC tag 5 without any physical contact. The IC tag 5 is activated by the electricity induced by the electromagnetic waves being radiated from the reader/writer 3, so it does not require any battery as power source. In addition, the IC tag 5 is extremely small and compact as it is constructed in an IC chip. This enables to realize, for example, a label that comprises an IC tag 5 between two sheets of paper, which are pasted to each other. This label can be attached onto a package 10.

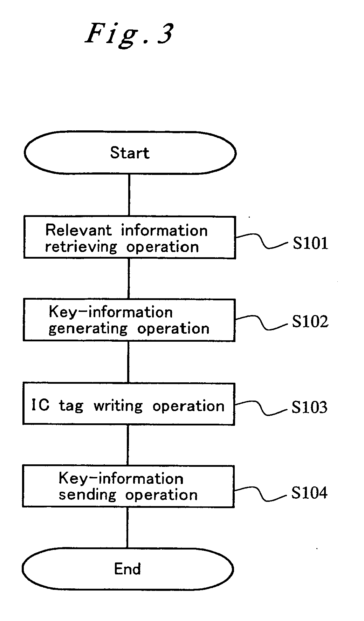

Now, the operations of the information-transfer system 1 is described in reference to FIG. 3 ~ FIG. 5. At first, the operation of the information-writing device 2 at the sending source 141 is described in reference to FIG. 3. Here, it is assumed that the IC tag 5, which is to be sent with the package 10, stores product information A (131a) and product information B (131b), which are sets of product information relevant to and to be conveyed to the physical distribution base 142 and to the receiving destination 143, respectively, as shown in FIG. 1. The sets of product information A, B (131a, 131b) are associated specifically with the corresponding pieces of destination information A, B (130a, 130b), and all this information is managed in the storing means 4 (a hard disk dive or the like) of the information-writing device 2.

In the information-writing device 2, the destination information A, B (130a, 130b) and the product information A, B (131a, 131b) is read from the storing means 4 (5101), and pieces of key information A, B (132a, 132b) are generated correspondingly for the respective destinations (the physical distribution base 142 and the receiving destination 143) (S102). In the following, all the product information is referred to by number 131, all the key information is referred to by number 132, and all the destination information is referred to by number 130. The key information 132 comprises a row of data, for example, from 10 bytes to 200 bytes. Every time when the product information 131 is written into an IC tag 5, key information 132 is generated such that the key information 132 differs for each IC tag 5 for improving data security. However, it can be arranged such that fixed key information 132 be used, for example, for each destination (the physical distribution base 142 or the receiving destination 143). In the latter case, it becomes unnecessary to dispatch the key information 132 for every package 10, but the level of data security will be lower.

Then, for each piece of key information A, B (132a, 132b), a corresponding set of product information A, B (131a, 131b) is stored into the memory unit 56 of the IC tag 5 as data 58 (refer to FIG. 2) for a corresponding one of the physical distribution base 142 and the receiving destination 143 (S103). At the same time, a key program 134 (134a, 134b) is written into the memory unit 56 together with the respective product information 131 (131a, 131b) as shown in FIG. 1. The key program 134 improves data security by preventing the product information 131 from being read from IC tag 5 unless the key information 132 is received. As a method for preventing the product information 131 (131a, 131b) from being read from the IC tag 5, the product information A, B (131a, 131b) is encrypted by using the respective corresponding key information A, B (132a, 132b) before the storage, and it is decrypted by the key program 134 (134a, 134b) in the presence of the matching key information when it is to be read.

Pieces of key information A, B (132a, 132b) are sent specifically to the information-reading devices 6 of the corresponding destinations (the physical distribution base 142 and the receiving destination 143) (S104). The key information 132 is sent through a route different from that of the package 10. For example, FIG. 1 shows a case where, by using the destination information 130, the key information 132 is sent by electronic mail 121 (121a, 121b) through a network 20. In this case, the destination information 130 (130a, 130b) is E-mail address information. Another method, as long as electronic data (key information 132) are exchanged through a network, may be used for achieving the same effect, rather than electronic mail.

Since the product information 131 is stored in association with the key information 132 in the IC tag 5 in the above described way, the product information 131 cannot be read unless the key information 132 is entered to the IC tag 5 as described below. As a result, the system has an improved data security. Therefore, the product information 131 never leaks to an unauthorized third person (who does not have the key information 132) while the package 10 is being transported for delivery.

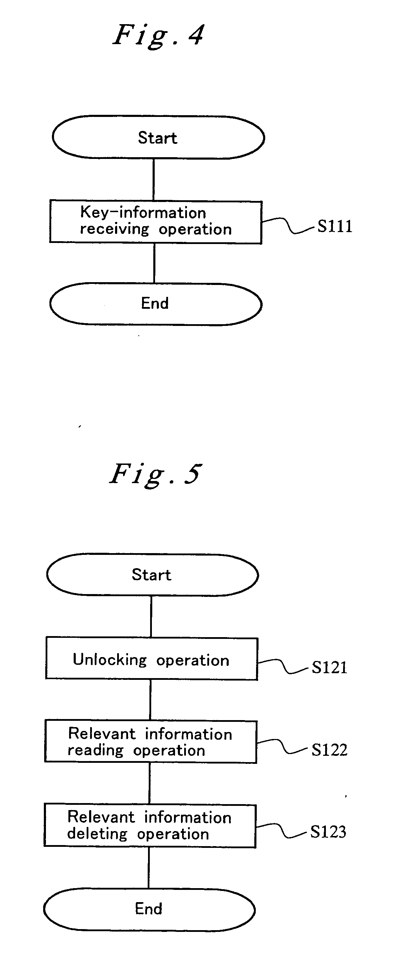

Now, the operations of the information-reading device 6 at the physical distribution base 142 and at the receiving destination 143 are described. The key information 132 is received by electronic mail 121 as described above before the package 10 arrives. As shown in FIG. 4, the key information 132 is retrieved from the electronic mail 121 and stored into the storage device (not shown) of the information-reading device 6 (S111).

When the package 10 is received, the product information 131, which is needed, is read from the IC tag 5, which is attached on the package 10. FIG. 5 shows this reading operation. Since the key program 134 is stored with the product information 131 in the memory unit 56 of the IC tag 5 as mentioned above, the key information 132, which has been acquired at S111, is entered to the key program 134, which runs on the CPU 54, for reading the product information 131 (S121). In this case, the product information 131, which has been encrypted as described above, is decrypted by the key program 134 in the presence of the key information 132. The product information 131, which has been decrypted, is read from the IC tag 5 by the reader/writer 3 (S122). For example, in the case of the physical distribution base 142, only key information piece A (132a) is received, so only product information set A (131a), which corresponds with this key information, can be read from the IC tag 5. Product information set B (131b) cannot be read there because this distribution base does not have the piece of key information required for this reading access.

Similarly, since the receiving destination 143 receives only key information piece B (132b), only product information set B (131b) can be read from the IC tag 5 there. Even if product information set A (131a), which has been read at the physical distribution base 142 as an upstream stage in the process of delivery, is left as is in the IC tag 5, and the package 10 (with the IC tag 5) is delivered to the receiving destination 143 as a downstream stage in the process, this product information set A (131a) cannot be retrieved at the receiving destination 143. Therefore, there is no problem on the point of data security. However, the system can be arranged such that the product information 130 (product information set A (131a) in the case shown in FIG. 1) that has been read at the upstream stage and is not necessary for the downstream stage be deleted from the IC tag 5 at the upstream stage (S123). The deleting of the data unnecessary for the downstream stage from the IC tag 5 further improves the data security. The deletion of the data that has become unnecessary from the IC tag 5 eliminates possibility of leakage of the relevant information, thus improving the data security. In the embodiment shown in FIG. 1, the product information 131 is deleted together with the key program 134. However, only the product information 131 may be deleted.

Since the IC tag 5, which is attached on the package 10, is used as a medium for conveying the relevant information to a downstream stage in the process of delivery in this way, and because the reading and writing of information from and into the IC tag 5 is performed by electromagnetic wave without any physical contact, a large quantity of data can be easily read and written in a short period of time, thus improving operational efficiency. The use of such IC tags 5 is advantageous especially in a case where a large number of packages 10 are handled in a physical distribution system.

In the above described embodiment, the key program 134 is stored together with the product information 131 and executed in the IC tag 5. However, the system may be arranged such that only the product information 131, which is encrypted, be stored in the IC tag 5 and that the key program 134 be executed in the information-writing device 2 and the information-reading device 6. In this case, the information-writing device 2 and the information-reading device 6 are realized by computers, and the above described operations are executed as programs that run on the computers. Also, in the above embodiment, the IC tag 5 is attached on the package 10 and used as a medium for conveying the relevant information to a downstream stage. It is clear from the description that any device can be used instead as long as it can function similarly.

### Second Embodiment

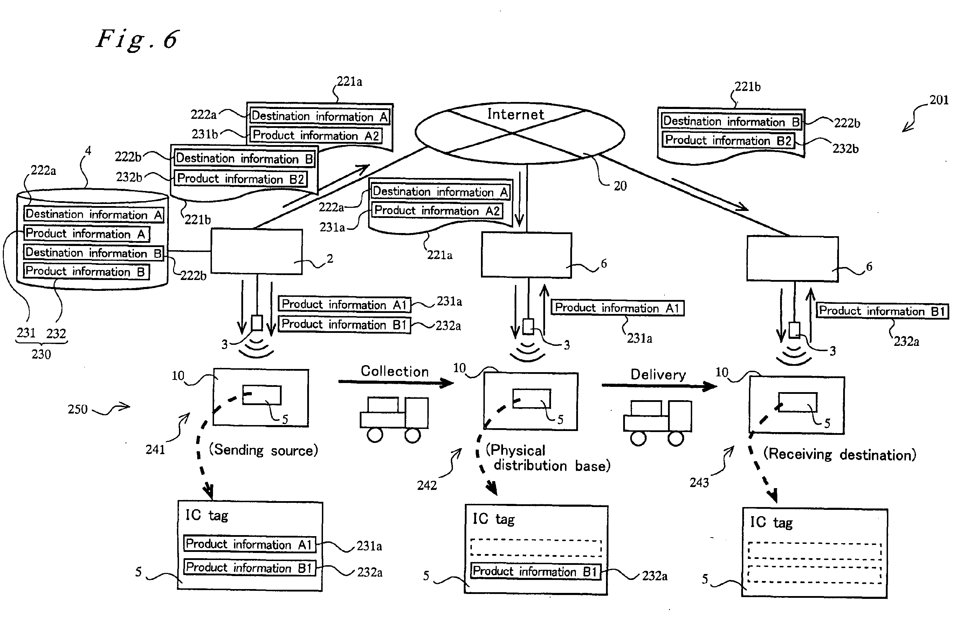

Now, a second embodiment according to the present invention is described in reference to FIG. 6 ~ FIG. 9. Also, the information-transfer system as a second embodiment stores information relating to a package (product) into an IC tag, which is attached on the package to be transported in a physical distribution system, and the information-transfer system conveys instructions or information from an upstream stage to a downstream stage in the distribution system, by allowing the information to be read at en route physical distribution bases and a receiving destination. At first, the physical distribution system 250, to which this information-transfer system 201 is applied, is described in reference to FIG. 6, which shows a case where a package 10 is delivered from a sending source 241 via a physical distribution base 242 to a receiving destination 243. In the case shown in FIG. 6, only one physical distribution base 242 is illustrated, but the distribution bases can be in plural.

The package 10 is attached with an IC tag 5, which is used for storing and conveying relevant information needed at the physical distribution base 242 and at the receiving destination 243. The relevant information is written into the IC tag 5 by using an information-writing device 2 and is read therefrom by using an information-reading device 6. The information-writing device 2 and the information-reading device 6 comprise each a reader/writer 3, which enters data into and retrieves data from the IC tag 5, respectively. In the information-transfer system 201, part of the information to be conveyed to a downstream stage is stored in the IC tag 5 while the remaining part of the information is conveyed through a route different from that of the package 10, which is described later. Therefore, the information-writing device 2 and the information-reading device 6 are connected with each other through a network (for example, the Internet) 20.

The IC tag (RFID tag) 5 and the reader/writer 3, which are used in the information-transfer system 201 as a second embodiment, are identical with those of the above described first embodiment (refer to FIG. 2), so no description of them is given here.

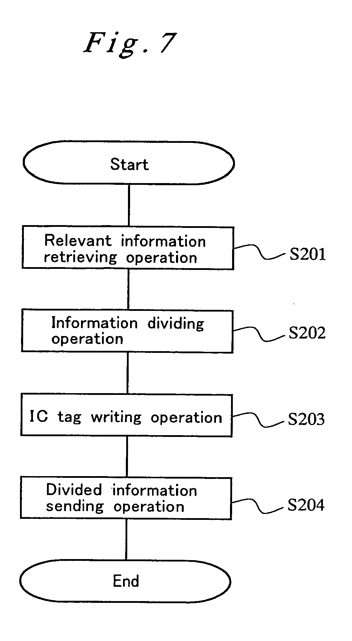

Now, the operations of the information-transfer system 201 are described in reference to FIG. 7 ~ FIG. 9. At first, the operation of the information-writing device 2 at the sending source 241 is described in reference to FIG. 7. In this case, as shown in FIG. 6, the relevant information to be sent to the physical distribution base 242 and to the receiving destination 243 is product information 230 (which comprises product information set A (231) and product information set B (232)), and product information set A (231) is conveyed to the physical distribution base 242 while product information set B (232) is conveyed to the receiving destination 243. Product information sets A, B (231, 232) are associated specifically with corresponding pieces of destination information A, B (222a, 222b), and all this information is managed in the storing means 4 (a hard disk dive or the like) of the information-writing device 2.

In the information-writing device 2, destination information pieces A, B (222a, 222b) and product information sets A, B (231, 232) are read from the storing means 4 (S201), and product information sets A, B (231, 232) are divided each into two for the respective destinations (the physical distribution base 242 and the receiving destination 243) (S202). FIG. 6 shows a case where the information to be sent in the IC tag 5 is first product information sets A1, B1 (231a, 232a) while the information to be sent through a route different from that of the IC tag 5 (through the Internet by electronic mail, which will be described later) is second product information sets A2, B2 (231b, 232b). Here, a method for dividing the information may simply divide the information into two or may divide into two data sets by any processing operation (for example, every other character of the information may be grouped into one or into the other).

Then, first product information sets A1, B1 (231a, 232a) are stored into the memory unit 56 of the IC tag 5 as data 58 (refer to FIG. 2) correspondingly for each of the physical distribution base 242 and the receiving destination 243 (S203). Additionally, when first product information sets A1, B1 (231a, 232a) are written into the IC tag 5, the information may be encrypted for improving data security. In this case, it is necessary to send key information for decrypting the encrypted data to the physical distribution base 242 and to the receiving destination 243 by any method.

Next, second information sets A2, B2 (231b 232b), which are the other parts of the divided information sets, are sent, respectively, to the information-reading devices 6 of the physical distribution base 242 and the receiving destination 243 (S204). Second product information sets A2, B2 (231b 232b) are sent through a route different from that of the package 10. For example, FIG. 6 shows a case where, by using the destination information 222 (222a, 222b), the second product information is sent by electronic mail 221 (221a, 221b) through a network 20. In this case, the destination information 222 (222a, 222b) is E-mail address information. Another method, as long as electronic data (the second product information A, B) are exchanged through a network, may be used for achieving the same effect, rather than electronic mail.

As described above, the relevant information to be conveyed to the downstream stages is divided into two, and one part is stored in the IC tag 5 and sent with the package 10 while the other part is sent to the stages where the relevant information is needed (the physical distribution base 242 and the receiving destination 243) by electronic mail, which takes a route different from that taken by the package 10. In this system, it is impossible to understand the relevant information stored in the IC tag 5 by means of this stored information only. As a result, the system has an improved data security. It is impossible for an unauthorized third person (who does not have the other part of the divided information) to acquire the product information 230 during the transportation of the package 10.

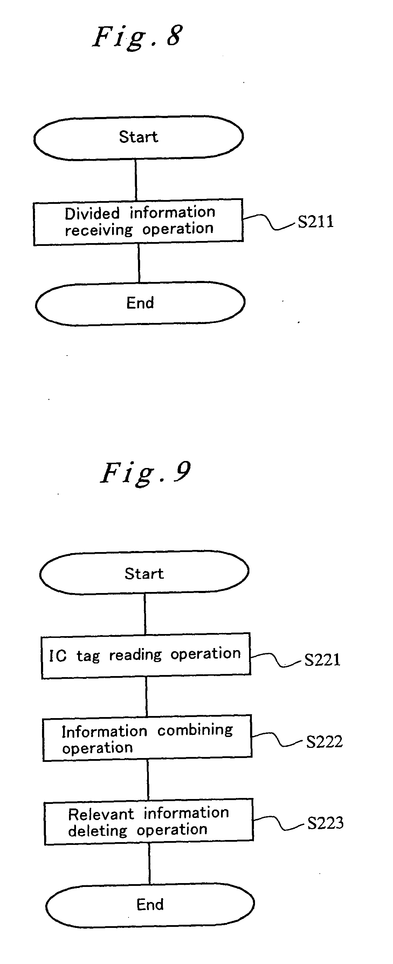

Now, the operations of the information-reading device 6 at the physical distribution base 242 and at the receiving destination 243 are described. Second product information sets A, B (231b, 232b) are received by electronic mail 221 as described above before the package 10 arrives. As shown in FIG. 8, at the respective information-reading devices 6, second product information sets A, B (231b, 232b) are retrieved from the electronic mail 221 (221a, 221b) and stored into the storage device (not shown) of each information-reading device 6 (S211).

When the package 10 is received, first product information set A1 (231a) or first product information set B1 (232a), which is a division of the product information, is read from the IC tag 5, which is attached on the package 10 (S221). At each downstream stage (the physical distribution base 242 or the receiving destination 243), a method for retrieving from the IC tag 5 the relevant information 230, which is addressed to this specific downstream stage, may comprise a step for retrieving the information at an address in the memory unit 56 of the IC tag 5, which address is predetermined for each downstream stage or may comprise a step for retrieving the information by using identification information as a key, which identification information is predetermined and stored in the IC tag 5. After the retrieval of the information, first product information set A1, B1 (231a, 232a), which is retrieved from the IC tag 5, is combined with second product information set A2, B2 (231b, 232b), which is retrieved from the electronic mail 221 (221a, 221b), for restoring product information set A, B (231, 232) (S222). This restoring operation is performed in the reversal of the above described dividing operation.

For example, in the case of the physical distribution base 242, which receives only second product information set A (231b) by electronic mail and retrieves only first product information set A (231a) from the IC tag 5, only the part (product information A) of the original relevant information that corresponds with the retrieved information is restored. In this case, even if first product information set B (232a) is retrieved from the IC tag 5, the part of the relevant information that correspond with first product information set B cannot be restored for recognition of the contents. Similarly, at the receiving destination 243, which receives only second product information set B (232b) by electronic mail and retrieves only first product information set B (232a) from the IC tag 5, only the part (product information B) of the original relevant information that corresponds with the retrieved information is restored. In this case, the part of the relevant information that correspond with first product information set A cannot be restored for recognition of the contents. Even if first product information set A (231a), which has been read at an upstream stage (the physical distribution base 242 shown in FIG. 6) in the process of delivery, is left as is in the IC tag 5, and the package 10 (with the IC tag 5) is delivered to a downstream stage (the receiving destination 243), product information set A cannot be taken out (restored) at any other location. Therefore, there is no problem on the point of data security. However, the system can be arranged such that the part of the relevant information (product information set A (231)) that has been read at the upstream stage and is not necessary for the downstream stage be deleted from the IC tag 5 (S223). The deleting of the data unnecessary for the downstream stage from the IC tag 5 further improves the data security. The deletion of the data that has become unnecessary from the IC tag 5 eliminates possibility of leakage of the relevant information from the IC tag 5 after the completion of the delivery, thus improving the data security.

Since the IC tag 5, which is attached on the package 10, is used as a medium for conveying the relevant information to a downstream stage as described above, and because the reading and writing of information from and into the IC tag 5 is performed by electromagnetic wave without any physical contact, a large quantity of data can be easily read and written in a short period of time, thus improving operational efficiency. The use of such IC tags 5 is advantageous especially in a case where a large number of packages 10 are handled in a physical distribution system.

In the above described embodiment, the product information is divided into two parts. However, the system can support the division of the information into any number equal to or greater than two. In this case, the divided parts of the information may have any meaningful information individually, or the divided parts must be combined together so that the combined parts as a whole have any meaningful information.

Furthermore, the information-writing device 2 and the information-reading device 6 can be realized by computers, and the above described operations can be executed as programs that run on the computers. Also, in the above embodiment, the IC tag 5 is attached on the package 10 and used as a medium for conveying the relevant information to a downstream stage. It is clear from the description that any device can be used instead as long as it can function similarly.

## Claims

1. An information-transfer system for transferring an object and relevant information from a sending source to a receiving destination, comprising:
information storage means, which is attached to said object and stores said relevant information;
information storing means, which writes into said information storage means said relevant information in association with key information when said key information and said relevant information are entered at said sending source;
key-information sending means, which sends said key information from said sending source to said receiving destination through a route different from that taken by said object; and
information reading means, which reads from said information storage means said relevant information that corresponds with said key information when said key information is entered at said receiving destination.

2. The information-transfer system set forth in claim 1, wherein:
if said object is delivered through at least one en route location, then said relevant information comprises a plurality of relevant information sets each of which is specific to and to be conveyed to a corresponding one of said en route locations and said receiving destination, and said key information comprises a plurality of key information pieces each of which is distinct and specific to a corresponding one of said en route locations and said receiving destination;
said information storing means writes into said information storage means said relevant information sets specifically in association with said key information pieces, which correspond to said en route locations and said receiving destination, respectively;
said key-information sending means sends said key information pieces each key information piece being specifically for a corresponding one of said en route locations and said receiving destination; and
when said key information piece received is entered, said information reading means reads from said information storage means only said relevant information set that corresponds with said key information piece entered.

3. The information-transfer system set forth in claim 1 or 2, wherein:
when said key information is entered, said information reading means reads from said information storage means only said relevant information that is associated with said key information entered and deletes from said information storage means said relevant information that is associated with said key information entered.

4. The information-transfer system set forth in any of claims 1~3, wherein:
said information storage means comprises an IC tag, from and to which said relevant information can be read and written without any physical contact.

5. A physical distribution system comprising at least one physical distribution base, through which an object is delivered from a sending source to a receiving destination, wherein:
said physical distribution system comprises the information-transfer system set forth in any of claims 1~4.

6. An information-transfer system for transferring an object and relevant information from a sending source to a receiving destination, comprising:
information storage means, which is attached to said object and stores part of said relevant information;
information storing means, which divides said relevant information into first relevant information and second relevant information and writes said first relevant information into said information-storage means at said sending source;
divided information sending means, which sends said second relevant information from said sending source to said receiving destination through a route different from that of said object; and
information reading means, which restores at said receiving destination said relevant information from said first relevant information read from said information storage means and said second relevant information received from said divided information sending means.

7. The information-transfer system set forth in claim 6, wherein:
if said object is delivered through at least one en route location, then said relevant information comprises a plurality of relevant information sets each of which is specific to and to be conveyed to a corresponding one of said en route locations and said receiving destination;
said information storing means stores into said information storage means divided sets of first relevant information, each divided set of first relevant information being specifically associated to a corresponding one of said en route locations or said receiving destination;
said divided information sending means sends divided sets of second relevant information from said sending source, each divided set of second relevant information being sent specifically for a corresponding one of said en route locations or said receiving destination through a route different from that of said object; and
said information reading means restores each relevant information set for a corresponding one of said en route locations or said receiving destination from said divided set of first relevant information that is specified to the corresponding one of said en route locations or said receiving destination and from said divided set of second relevant information that has been received from said divided information sending means.

8. The information-transfer system set forth in claim 6 or 7, wherein:
said information reading means reads said first relevant information from said information storage means and deletes said first relevant information from said information storage means after the reading.

9. The information-transfer system set forth in any of claims 6~8, wherein:
said information storage means comprises an IC tag, from and to which said relevant information can be read and written without any physical contact.

10. A physical distribution system comprising at least one physical distribution base, through which an object is delivered from a sending source to a receiving destination, wherein:
said physical distribution system comprises the information-transfer system set forth in any of claims 6~9.
